# EUROPEAN PATENT APPLICATION

(11) **EP 2 574 085 A1**
(43) Date of publication of application: **27.03.2013**
(21) Application number: 10851632.9
(22) Date of filing: 09.09.2010
(51) Int. Cl.: H04W 4/02, H04N 7/14, H04W 4/12

(54) **METHOD FOR USER POSITION NOTIFICATION AND MOBILE TERMINAL THEREOF**

(30) Priority: 18.05.2010 CN 201010184473
(71) Applicant: ZTE Corporation, Shenzhen, Guangdong 518057 (CN)
(72) Inventor: FANG, Wen, Guangdong 518057 (CN); LIU, Yang, Guangdong 518057 (CN)
(74) Representative: Garratt, Peter Douglas
(86) International application number: PCT/CN2010/076780
(87) International publication number: WO 2011/143875

(57) **Abstract**

The present invention discloses a method for user position notification and a mobile terminal thereof. The mobile terminal includes: an acquisition module configured for acquiring videophone images and mobile terminal position information; a transmitter module configured for concurrently transmitting the video phone images and position information to the call opposite end of the mobile terminal. The present invention enables the user to acquire the position and video images of the opposite end at the same time, and therefore improves satisfaction of the user

## Description

### Field of the Invention

The present invention relates to the communication field and in particular to a mobile terminal and a method for informing user location.

### Background of the Invention

Currently, there are mainly two positioning modes of GPS positioning and mobile cell positioning in the mobile phone positioning technology field. The precision of these two prior arts can be up to meter level in common mobile phone applications, which has already met the positioning precision requirements of average users. A corresponding location can be found on an electronic map according to the obtained longitudes and latitudes information through positioning by the combination of mobile phone positioning and geographical information system, i.e. the combination with electronic maps, thus the location of a user can be identified on the map. Currently, the mobile phone positioning application supports users' self-positioning and supports the inquiry of others' current location under the permission of others.

On the other hand, the mobile phone application has went into 3G field, and with the improvement of network transmission performance, videophone service is now gradually walking into people's vision. This service enables a user to see an image captured by a peer terminal while calling and at the same time can perform communication of voice and video, which brings convenience to people's life.

In the mobile videophone field, the most commonly used communication protocol is H.324 protocol set. It includes H.223 multiplexing protocol, H.245 system control protocol, H.263 video encoding protocol, G.723.1 audio encoding protocol, etc.

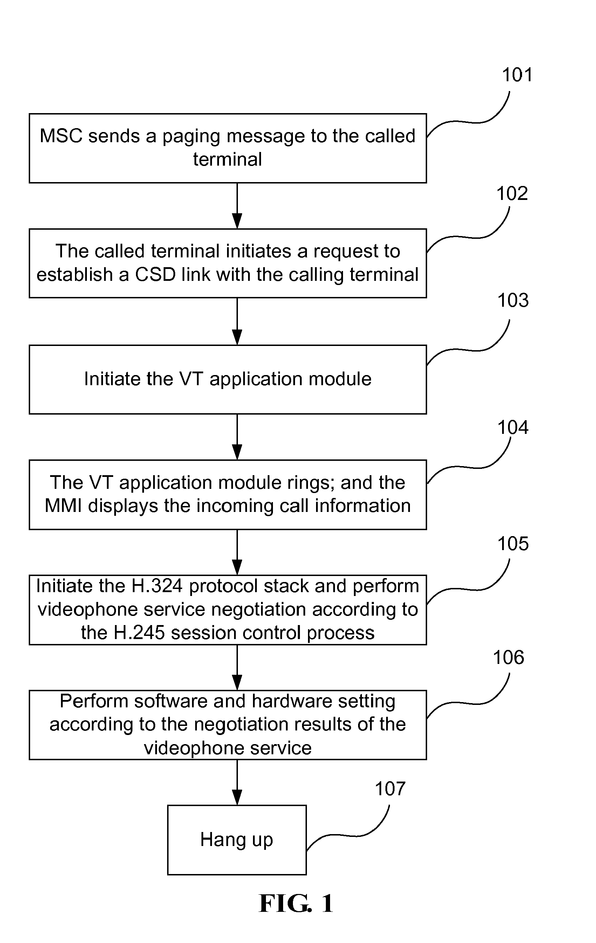

As shown in Fig. 1, using a called terminal procedure for example, a video call based on H.324 protocol set is established as follows:
101: A mobile switch center (abbreviated as MSC) sends a paging message to a called party after receiving a videophone request of a calling party.
102: The called terminal requests to perform signaling interaction after receiving the paging message and establishes a circuit switch data link with the calling terminal.
103: After the link is established successfully, the called terminal initiates the videophone.
104: The called party rings and displays the incoming call information through a Man-Machine Interface (MMI).
105: The user answers the videophone, initiates the H.324 protocol stack, and negotiates according to the H.245 session control process.
106: The called terminal configures devices including microphone, camera, loudspeaker and the like according to the negotiation results, opens the encoding and decoding and audio and video logic channels, and enters the call state.
107: After hanging up, the protocol stack is removed and the video call application is terminated.

It can be known from the above procedure that H.245 protocol mainly performs such session control functions as service ability negotiation and channel control and the like in video communication.

During the video call, both parties communicating with each other often need to know each party's location. For this end, in relevant art, a method for displaying one's own location intuitively to a video call peer is provided. In this method, the GPS positioning function is firstly activated in the background during the videophone call, then the positioning information is mapped onto the mobile phone map after the positioning is successful, and finally a map screenshot including the positioning information is transmitted through the video stream used to transmit videophone images, and at this moment images of the videophone are not transmitted.

This method is capable of achieving the function of describing one's own location to a peer, however, since the transmission of positioning pictures occupies the video stream used to transmit videophone pictures, it makes the receiving end only able to acquire one of the videophone image and the map positioning image at the same moment and unable to acquire these two images simultaneously, that is, it would make the user unable to see the peer and obtain the peer's detailed location information simultaneously, which will affect user experience.

### Summary of the Invention

The main object of the present invention is to provide a mobile terminal and a method for informing user location so as to at least solve the above problem.

A mobile terminal is provided according to one aspect of the present invention, which includes: an acquisition module configured for acquiring a videophone image and location information of the mobile terminal; and a transmitter module configured for transmitting the videophone image and the location information to a call peer of the mobile terminal in parallel.

Furthermore, the transmitter module is configured for transmitting the location information to the call peer through a system control protocol channel and sending the videophone image to the call peer through a video stream.

Furthermore, the mobile terminal further includes: a receiver module configured for receiving videophone images from other mobile terminals and location information of the other mobile terminals in parallel; and a display module configured for simultaneously displaying the location information and the videophone images received in parallel from the receiver module through a conversation interface.

Furthermore, the display module further includes: an overlay module configured for overlaying the location information received in parallel onto the videophone image received in parallel in a text format to obtain an overlaid image; and a first display module configured for displaying the overlaid image through the conversation interface.

Furthermore, the display module further includes: an extract module configured for extracting a screenshot of a corresponding area in an electronic map that includes the location information received in parallel; and a second display module configured for simultaneously displaying the screenshot and the videophone image received in parallel through the conversation interface.

Furthermore, the acquisition module further includes: an image acquisition module configured for acquiring the videophone image; a request module configured for sending a request to a server that positions the mobile terminal; and a receiver module configured for receiving a response from the server and resolving the location information of the mobile terminal in the response.

A method for informing user location is provided according to another aspect of the present invention. The method includes: a mobile terminal acquiring a videophone image and the location information of the mobile terminal; and the mobile terminal transmitting the videophone image and the location information to a call peer of the mobile terminal in parallel.

Furthermore, the mobile terminal transmitting the videophone image and the location information to a call peer of the mobile terminal in parallel includes: the mobile terminal transmitting the location information to the call peer through a system control protocol channel and transmitting the videophone image to the call peer through video stream.

Furthermore, after the mobile terminal transmitting the videophone image and the location information to a call peer of the mobile terminal in parallel, this method further includes: the call peer receiving the videophone image and the location information in parallel; and the call peer simultaneously displaying the videophone image and the location information through the conversation interface.

Furthermore, the call peer displaying the videophone image and the location information simultaneously through the conversation interface includes: the call peer overlaying the location information onto the videophone image in a text format to obtain an overlaid image and then displaying the overlaid image through the conversation interface; or the call peer extracting a screenshot of the location information received in parallel at a corresponding area in the electronic map and then simultaneously displaying the screenshot and the videophone image received in parallel through the conversation interface.

By virtue of the present invention, the problem that the location information announcement solution in relevant art makes the user unable to obtain the location information and the videophone image simultaneously which affects user experience is solved by using a mobile terminal to send the videophone image and the location information in parallel to a call peer, which enables the user to obtain the location and video image of the peer simultaneously, thus improving user satisfaction.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of the establishment process of a called video call based on H.324 protocol according to relevant art;
Fig. 2 is a block diagram of the structure of a mobile terminal according to the embodiments of the present invention;
Fig. 3 is block diagram I of the preferred structure of the mobile terminal according to the embodiments of the present invention;
Fig. 4 is block diagram II of the preferred structure of the mobile terminal according to the embodiments of the present invention;
Fig. 5 is block diagram III of the preferred structure of the mobile terminal according to the embodiments of the present invention;
Fig. 6 is block diagram VI of the preferred structure of the mobile terminal according to the embodiments of the present invention;
Fig. 7 is a flow chart of a method for informing user location according to the embodiments of the present invention;
Fig. 8 is a message flow chart of transmitting location information through H.245 according to embodiment 2 of the present invention; and
Fig. 9 is a block diagram of the structure of a video mobile terminal according to embodiment 3 of the present invention.

### Detailed Description of Embodiments

The present invention will now be described in detail with reference to the drawings and in conjunction with embodiments in the following. It needs to note that the embodiments of the present application and the features in the embodiments can be combined with each other in the situation of no conflict.

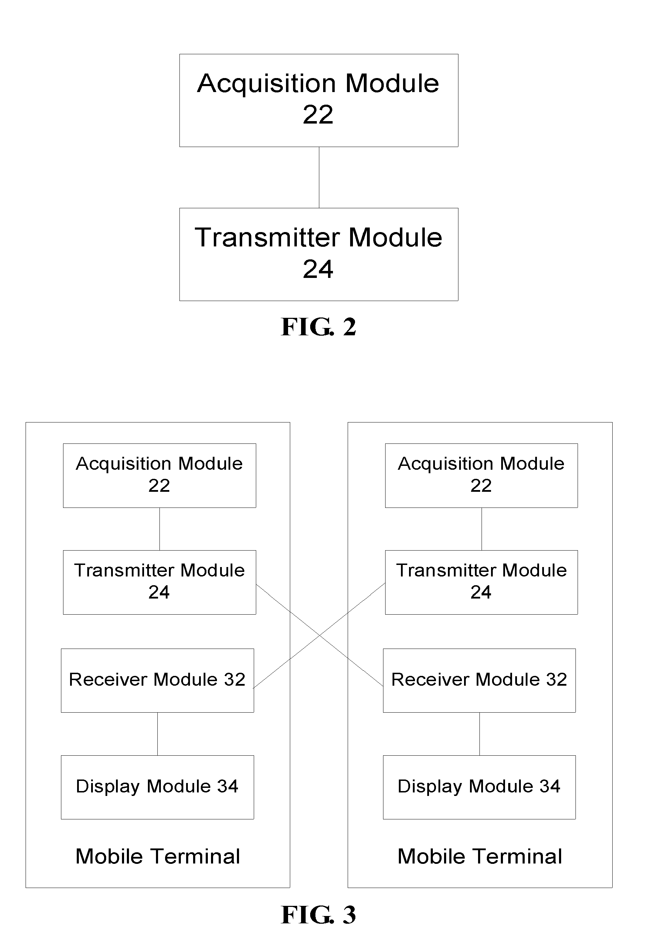

Fig. 2 is a block diagram of the structure of a mobile terminal according to the embodiments of the present invention, which mobile terminal includes: an acquisition module **22** for acquiring a videophone image and the location information of the mobile terminal; and a transmitter module **24** being coupled to the acquisition module **22** for transmitting the videophone image and the location information to a call peer of the mobile terminal in parallel.

The location information announcement solution in relevant art makes the user unable to obtain the location information and the videophone image simultaneously which causes user experience to decrease. The mobile terminal provided by the embodiments of the present invention enables the call peer to obtain the location information and the video image information of the current mobile terminal simultaneously by transmitting the videophone image and the location information to a call peer of the mobile terminal through the transmitter module **24**, which improves user operability, thus improving user satisfaction.

Preferably, the transmitter module **24** is used for transmitting the location information to the call peer through a system control protocol channel and transmitting the videophone image to the call peer through video stream. The mobile terminal provided in the embodiments of the present invention uses video stream to send videophone images and uses a channel meeting the system control protocol to send location information, which achieves the parallel transmission of both, enables the call peer to obtain the location information and the video image of the current mobile terminal simultaneously, and improves user satisfaction; and furthermore, the videophone image and location information are both sent by using existing channels defined by standards and it makes little change to the existing procedure, therefore its implementation is relatively simple.

It needs to note that although the above preferred embodiments set forth a solution that the location information is sent to the call peer through a system control protocol channel and the videophone image is sent to the call peer through video stream, those skilled in the art can understand that two other different types of channels can also be used to transmit the videophone image and the location information respectively and it only needs to make sure that the videophone image and the location information can be transmitted in parallel.

Fig. 3 is block diagram I of the preferred structure of the mobile terminal according to the embodiments of the present invention, and as shown in Fig. 3, preferably, this mobile terminal can further include: a receiver module **32** for receiving videophone images from other mobile terminals and the location information of other mobile terminals in parallel; and a display module **34** being coupled to the receiver module **32** for displaying the location information and the videophone image received in parallel by the receiver module on a conversation interface simultaneously

The location information and the videophone image received in parallel by the receiver module are displayed simultaneously through the conversation interface through the display module **34** enables the user to learn the location information of a peer in the situation of call images being uninterrupted, thus improving user satisfaction. Of course, in the situation of both mobile terminals having this function, both parties during the call can learn the specific location of the peer in the situation of video images being uninterrupted.

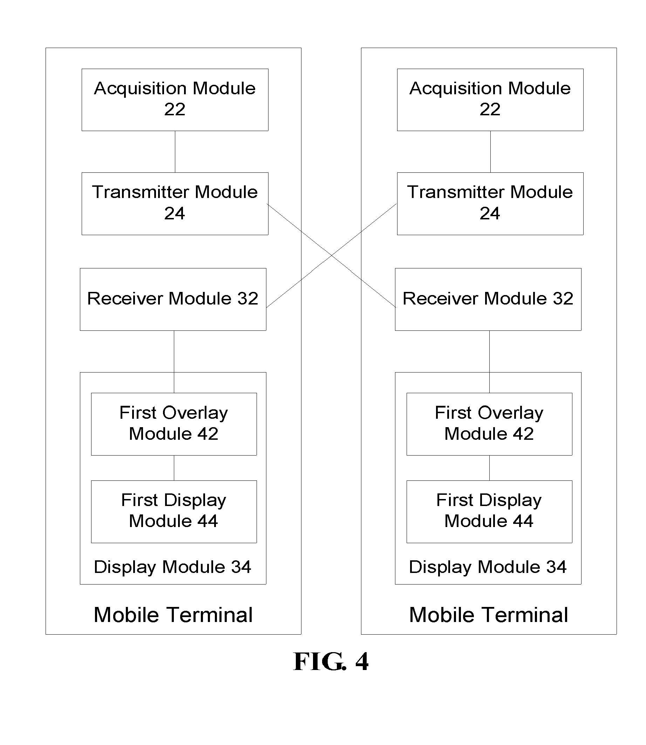

Fig. 4 is block diagram II of the preferred structure of the mobile terminal according to the embodiments of the present invention, and as shown in Fig. 4, preferably, the above display module **34** can include: an overlay module **42** for overlaying the location information receiving in parallel onto the videophone image received in parallel in a text format to obtain an overlaid image; and a first display module **44** being coupled to the first overlay module **42** for displaying the overlaid image through the conversation interface. The location information and the videophone image being displayed to the user altogether in a text format through the cooperation of the overlay module **42** and the first display module **44** in the display module **34** not only enables the user to obtain the location information and also does not affect the user to view the video image of the videophone, which improves user view experience.

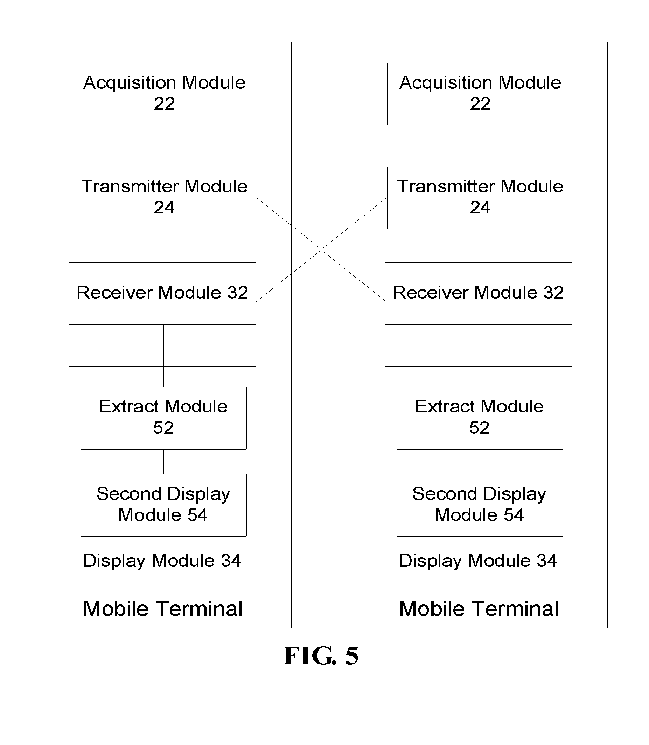

Fig. 5 is block diagram III of the preferred structure of the mobile terminal according to the embodiments of the present invention, and as shown in Fig. 5, preferably, the display module **34** can include: an extract module **52** for extracting a screenshot of the location information received in parallel at a corresponding area in the electronic map; and a second display module **54** being couple to the extract module **52** for displaying the screenshot and the videophone image received in parallel through the conversation interface simultaneously. The screenshot of the location information being displayed through the second display module **54** enables the user to learn the location of the peer intuitively and at the same time to see the video image of the videophone, which improves user satisfaction.

It needs to note that the second display module **54** displaying the screenshot and the videophone image received in parallel simultaneously can be divided into multi-screen display, or child-father-screen display, etc. which can be set and determined by the user himself.

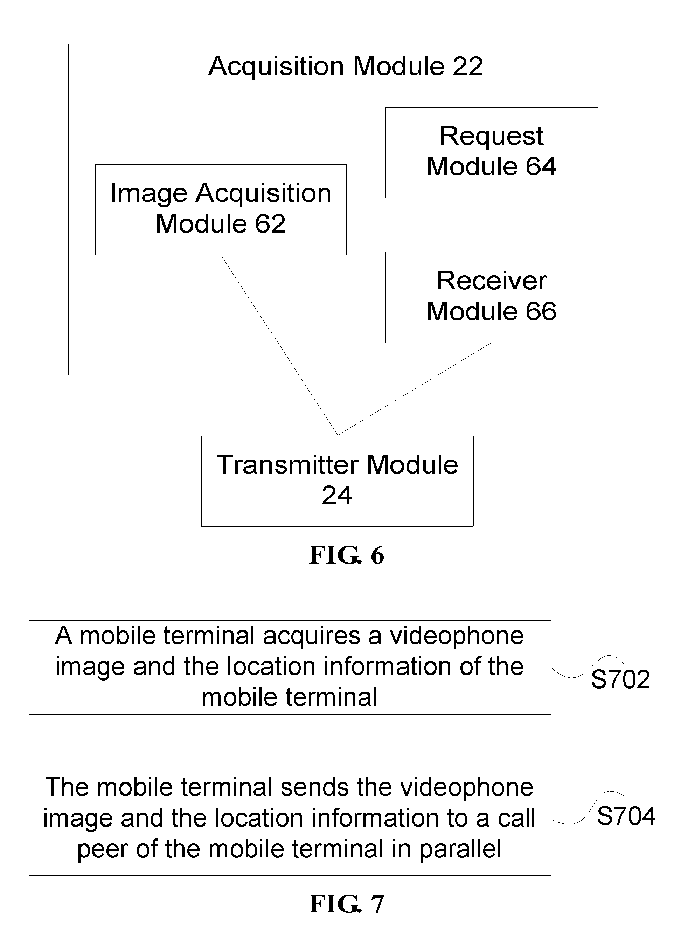

Fig. 6 is block diagram VI of the preferred structure of the mobile terminal according to the embodiments of the present invention, and preferably, the acquisition module **22** includes: an image acquisition module **62** for acquiring a videophone image; a request module **64** for sending requests to a server which positions the mobile terminal; and a receiver module **66** being coupled to the request module **64** for receiving a response from the server and resolving the location information of the mobile terminal in the response. The requests being sent to the server which positions the mobile terminal by the request module **64** and the response from the server being received by the receiver module **66** and the location information of the mobile terminal being resolved from the response can achieve remote positioning, thus saving the power consumption and running load of the private phone and improving the running efficiency of the mobile terminal.

Fig. 7 is a flow chart of a method for informing user location according to the embodiments of the present invention, and as shown in Fig. 7, it includes:
Step S702: A mobile terminal acquires a videophone image and the location information of the mobile terminal; and
Step S704: The mobile terminal sends the videophone image and the location information to a call peer of the mobile terminal in parallel.

The location information announcement solution in relevant art makes the user unable to obtain the location information and the videophone image simultaneously which causes user experience to decrease. The method provided by the embodiments of the present invention enables the call peer to obtain the location information and the video image information of the current mobile terminal simultaneously by transmitting the videophone image and the location information to a call peer of the mobile terminal in parallel, which improves user operability, thus improving user satisfaction.

Preferably, the mobile terminal transmitting the videophone image and the location information to a call peer of the mobile terminal in parallel includes: the mobile terminal transmitting the location information to the call peer through a system control protocol channel and transmitting the videophone image to the call peer through video stream. In the method provided by the embodiments of the present invention, videophone images being sent using video stream and location information being sent using a channel meeting the system control protocol achieve the parallel transmission of both, enable the call peer to obtain the location information and the video image of the current mobile terminal simultaneously, and improve user satisfaction; and furthermore, the videophone image and location information are both sent using existing channels defined by standards and it makes little change to the existing procedure, therefore its implementation is relatively simple.

Preferably, after the mobile terminal transmitting the videophone image and the location information to a call peer of the mobile terminal in parallel, it further includes: the call peer receiving the videophone image and the location information in parallel; and the call peer displaying the videophone image and the location information simultaneously through the conversation interface.

The location information and the videophone image received in parallel by the receiver module being displayed simultaneously through the conversation interface enables the user to learn the location information of a peer in the situation of call images being uninterrupted, thus improving user satisfaction. Of course, in the situation both mobile terminals having this function, both parties during the call can learn the specific location of the peer in the situation of video images being uninterrupted.

Preferably, the call peer displaying the videophone image and the location information simultaneously through the conversation interface includes one of the following modes:
Mode I: The call peer overlays the location information onto the videophone image in a text format to obtain an overlaid image, and afterwards displays the overlaid image through the conversation interface. In this mode, the location information and the videophone image being displayed to the user altogether in a text format not only enables the user to obtain the location information and also does not affect the user to view the video image of the videophone, which improves user view experience.
Mode II: The call peer extracts a screenshot of the location information received in parallel at a corresponding area in an electronic map, and afterwards displays the screenshot and the videophone image received in parallel simultaneously through the conversation interface. In this mode, the user can learn the location of the peer intuitively and at the same time can see the video image of the videophone, which improves user satisfaction.

In the above method, the mode of achieving positioning can be one of the following but not limited to this:
Mode I: Acquire the longitudes and latitudes information of the mobile terminal; and determine this longitudes and latitudes information as the location information of the mobile terminal.
Mode II: Acquire the longitudes and latitudes information of the mobile terminal; search the geographical location information of the longitudes and latitudes information in an electronic map, wherein the geographical location information includes: the name of the street and/or building where the mobile terminal is located; and determine the above geographical location information as the location information of the mobile terminal.

In the above method, the mobile terminal can further acquire the videophone image and the updated location information of the mobile terminal regularly so as to update the current condition information of the terminal.

Embodiments 1 to 3 will now be described in the following, which combine the technical solutions of the above several preferred embodiments.

### Embodiment 1

The solution of this embodiment is based on H.324 video communication protocol, or based on other control protocols and the like using H.245 and developed from H.245. The objects of displaying the location of the peer in real time during the call and performing subsequent extension process are achieved by making certain supplement to H.245 control protocol and adding a corresponding process procedure on a corresponding terminal. The mobile terminal used by the user needs to support videophone service, preferably support one of GPS positioning function or cell positioning function, and preferably support mobile phone map.

It has to define new abilities in the H.245 ability set: location information transmission ability, which ability (abbreviated as ability A in the following) supports to transmit the longitudes and latitudes information and/or the street/building information of both call parties. A new respective message type (abbreviated as message type B in the following) is defined in H.245. The terminal possessing ability A can send, receive and feed back the location information, which location information includes at least one of the following: longitudes information and latitudes information, street information, and building information.

The method for informing user location provided by this embodiment includes the following steps:
Step 1: During a call, when party *a* needs to send his own location information to party *b*, he initiates the mobile phone positioning function in the background via the UI interface to obtain his own longitudes and latitudes information through positioning. The longitudes and latitudes obtained through positioning are matched and searched on the mobile phone map to obtain the name of the street or building where this location is located. The message defined in message type B is edited by the longitudes and latitudes and the name of the street or building and is transmitted to party *b* through a H.245 channel.

In the step, party *a* should perform re-positioning regularly after having opened the positioning function so as to acquire the latest location information to update it to the peer. When party a is unable to perform successful positioning due to situation limitation, for example he is unable to search enough amount of GPS satellites, then he transmits a positioning error message to party *b*, and party *b* displays relevant prompt of positioning error on the videophone conversation interface after receiving the above message.

Step 2: Party *b* performs determination receiving feedback after receiving the message, resolves the longitudes and latitudes and the street information where party *a* is located in the message, and displays these information through the conversation interface in a text format or in other forms, therefore party *b* can see the location of party *a* during the call.

After party *b* has received and displayed the location information transmitted by party *a* through H.245 channel, if party *b* user wants to further open the map to view the location of party *a*, it should support to call mobile phone map during the call and mark the specific location transmitted by party *a* on the map.

### Embodiment 2

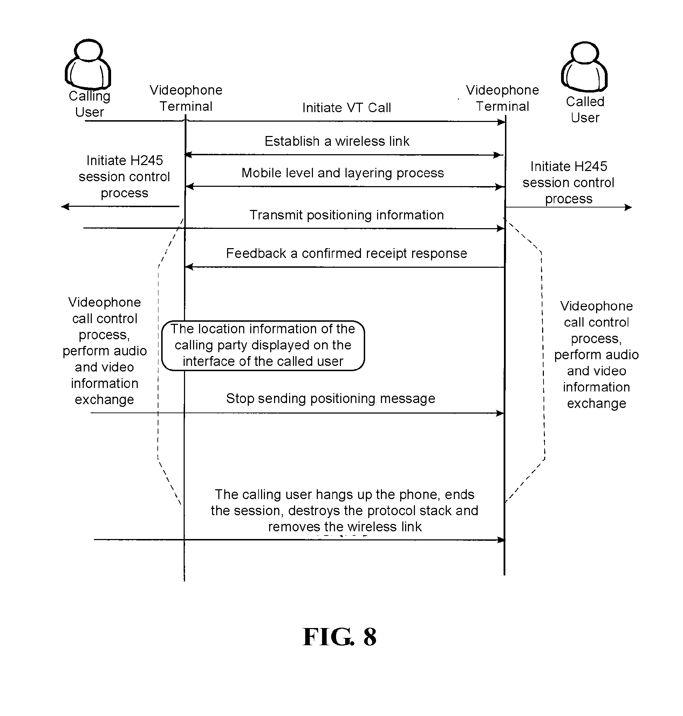

Fig. 8 describes embodiment 2 of the present invention in the view of videophone message transport protocol procedure. As shown in Fig. 8, the particular implementation process in a both party videophone module is as follows:
Step 1: A calling user initiates a video call to a called user and starts the establishment process of a wireless link. After the establishment succeeds, the mobile level layering process is started and both parties negotiate a same mobile level.
Step 2: After the layering succeeds, both parties initiate H.245 call control process, establish a control channel and perform ability exchange. In this step, both parties exchange the above ability A and confirm that both parties support location information transmission and receiving and display abilities in the videophone.
Step 3: The calling user obtains the location information through positioning and sends his own longitudes and latitudes and street/building information in the manner of H.245 call control protocol. And at the same time, the regular retransmission mechanism is initiated, if the response message of the peer has still not been received when the time is out, then the determining loop delay process in H.245 protocol is initiated so as to determine whether the called party is reachable. If unreachable, then this call is abandoned. If reachable, then continue the call and transmit the location information again to the called party.
Step 4: The called party feeds back to the calling party to confirm the receiving after receiving the location information. At the same time, the location information is displayed on the video conversation interface so as to be displayed to the called user and it supports other relevant extension process.
Step 5: The calling user repeats to position himself at a certain time interval and repeats steps 3 and 4 to enable the called party to update the current location of the calling user timely
Step 6: The calling user stops sending his own location information to the called user, and the called user clears the display of the location information of the calling user on the interface after receiving the signal of stopping sending.
Step 7: The user hangs up the phone, removes the protocol stack and the wireless link, and the call is over.

### Embodiment 3

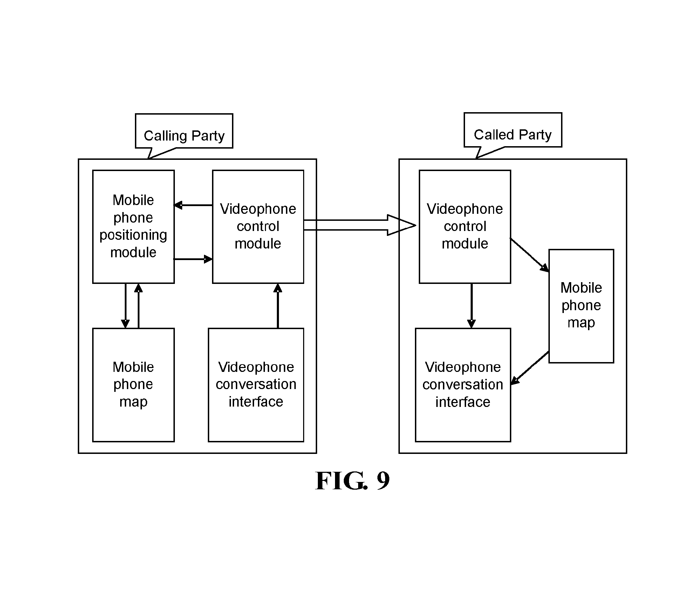

Fig. 9 is a block diagram of the structure of a video mobile terminal according to embodiment 3 of the present invention, wherein the calling terminal includes: a mobile phone positioning module, a videophone control module, a mobile phone map and a videophone announcement interface; and the called terminal includes: a videophone control module, a mobile phone map and a videophone announcement interface. It is assumed that a calling user sends location information to a called user, the particular steps of which are as follows:
Step 1: The calling user performs corresponding option operations on the interface during the videophone call and opens the function of sending his own location information to the peer
Step 2: The videophone control module sends initiating positioning information to the mobile phone positioning module to inform the mobile phone positioning module to position itself according to the user operation.
Step 3: The mobile phone positioning module provides the location information to the mobile phone map module after having obtained the location information. The mobile phone map module obtains the street name or building name where this location is located through searching.
Step 4: The mobile phone map module transmits the corresponding street name or building name obtained through searching back to the mobile phone positioning module.
Step 5: The mobile phone positioning module transmits the longitudes, latitudes, and street or building name to the videophone control module.
Step 6: The videophone control module edits these information and sends them in company with the video, audio and other control signals in the video communication to the called party in the manner of H.245.
Step 7: The called party videophone control module displays the location information on the videophone conversation interface in a text format after receiving the location information of the calling party. The called user can see the current location of the calling user while calling.
Step 8: The called party videophone control module transmits the longitudes and latitudes information to the mobile phone map module of the called party and searches the specific location of the calling user in the mobile phone map module.
Step 9: Extensible, if the called user chooses to view the location of the calling user on the map, then the mobile phone map module transmits the map information which marks the location of the calling party to the videophone module to display it through the conversation interface in place of the videophone picture of the calling party. At this moment, the conversation image of the calling user is replaced by the location picture of the calling user on the map.

After the calling party and the called party have established a location information transmission channel, the positioning module of the calling party should initiates positioning regularly and transmit the latest location information to the called party, and the called party displays it through the conversation interface.

It needs to note that the mobile phone positioning module and mobile phone map relevant modules in Fig. 9 are located inside of the calling and called mobile phones. In fact, this module can also be located at the network side in the form of server. That is to say, during a videophone call, the calling party can also acquire his own location through requiring the network side to provide the positioning information of the mobile phone and further transmits it to the called party and displays it through the conversation interface of the called party

In summary, the solution for informing user location provided by the embodiments of the present invention ensures that the peer is able to obtain the location information and the video image of the user, and can bring convenience to the information communication among friends, which makes the user able to see the location of the peer during the video call. As to the vulnerable groups such as the elders and the children, this function can bring convenience to their relatives or guardians to obtain their location information, which greatly facilitate the seeking and rescue work when they are lost or in danger. Moreover, this function is beneficial to the deaf and dumb disabled to use mobile phones to describe their own location information more conveniently

Apparently, those skilled in the art should understand that each module or step in the above present invention can be implemented through general-purpose computing devices and they can be put together on single computing devices or distributed on a network consisted of a plurality of computing devices, optionally, they can be implemented using computing device executable program code, therefore, they can be executed by computing devices by storing them in a storage device, and the shown or described steps can be executed in an order different from this, or they can be made into each integrated circuit module respectively or they can be implemented by making a plurality of modules or steps in them into single integrated modules respectively Thus, the present invention is not limited to the combination of any specific hardware and software.

Above description is only to illustrate the preferred embodiments but not to limit the present invention. Various alterations and changes to the present invention are apparent to those skilled in the art. The protective scope defined in the present invention shall comprise any modification, equivalent substitution and improvement within the spirit and principle of the present invention.

## Claims

1. A mobile terminal, **characterized by** comprising:
an acquisition module configured for acquiring a videophone image and location information of the mobile terminal; and
a transmitter module configured for transmitting the videophone image and the location information to a call peer of the mobile terminal in parallel.

2. The mobile terminal according to claim 1, **characterized in that** the transmitter module is configured for transmitting the location information to the call peer through a system control protocol channel and sending the videophone image to the call peer through a video stream.

3. The mobile terminal according to claim 1 or 2, **characterized by** further comprising:
a receiver module configured for receiving videophone images from other mobile terminals and location information of the other mobile terminals in parallel; and
a display module configured for simultaneously displaying the location information and the videophone images received in parallel from the receiver module through a conversation interface.

4. The mobile terminal according to claim 3, **characterized in that** the display module further includes:
an overlay module configured for overlaying the location information received in parallel onto the videophone image received in parallel in a text format to obtain an overlaid image; and
a first display module configured for displaying the overlaid image through the conversation interface.

5. The mobile terminal according to claim 3, **characterized in that** the display module further includes:
an extract module configured for extracting a screenshot of a corresponding area in an electronic map that includes the location information received in parallel; and
a second display module configured for simultaneously displaying the screenshot and the videophone image received in parallel through the conversation interface.

6. The mobile terminal according to claim 1, **characterized in that** the acquisition module further includes:
an image acquisition module configured for acquiring the videophone image;
a request module configured for sending a request to a server that positions the mobile terminal; and
a receiver module configured for receiving a response from the server and resolving the location information of the mobile terminal in the response.

7. A method for informing a mobile terminal user's location, **characterized by** comprising:
a mobile terminal acquiring a videophone image and the location information of the mobile terminal; and
the mobile terminal transmitting the videophone image and the location information to a call peer of the mobile terminal in parallel.

8. The method according to claim 7, **characterized in that** the mobile terminal sending the videophone image and the location information to a call peer of the mobile terminal in parallel further includes:
the mobile terminal transmitting the location information to the call peer through a system control protocol channel and sending the videophone image to the call peer through a video stream.

9. The method according to claim 7 or 8, **characterized by** further comprising: after the mobile terminal sends the videophone image and the location information to a call peer of the mobile terminal in parallel,
the call peer receiving the videophone image and the location information in parallel; and
the call peer simultaneously displaying the videophone image and the location information through a conversation interface.

10. The method according to claim 9, **characterized in that** the call peer simultaneously displaying the videophone image and the location information through a conversation interface further includes:
the call peer overlaying the location information onto the videophone image in a text format to obtain an overlaid image, and afterwards displaying the overlaid image through the conversation interface; or,
the call peer extracting a screenshot of a corresponding area in an electronic map that includes the location information received in parallel, and afterwards simultaneously displaying the screenshot and the videophone image received in parallel through the conversation interface.
